# EUROPÄISCHE PATENTSCHRIFT

(11) **EP 1 440 933 B1**
(45) Veröffentlichungstag und Bekanntmachung des Hinweises auf die Patenterteilung: **09.11.2016**
(21) Anmeldenummer: 03021057.9
(22) Anmeldetag: 18.09.2003
(51) Int. Cl.: C01B 3/06, C01B 3/08, B01J 7/02

(54) **Gasgenerator zur Erzeugung von Wasserstoffgas**
Gas generator for the production of hydrogen gas
Générateur de gaz pour la production d'hydrogène gazeux

(30) Priorität: 23.01.2003 DE 10302524
(43) Veröffentlichungstag der Anmeldung: 28.07.2004
(73) Patentinhaber: Astrium GmbH, 85521 Ottobrunn (DE)
(72) Erfinder: Cohrt, Claus, 28844 Weyhe (DE); Ramaker, Hermann, 28816 Stuhr (DE); Kunst, Jörg-Peter, 27729 Holste (DE); Krüger, Karsten, 23328 Fassberg (DE)
(74) Vertreter: Marschall, Stefan

(56) Entgegenhaltungen:
- US-A- 3 158 994
- US-A- 3 293 676
- US-A- 5 372 617
- DATABASE WPI Week 199002 Derwent Publications Ltd., London, GB; AN 1990-014276 XP002277909 & SU 1 470 661 A (KALEKIN O YU), 7. April 1989 (1989-04-07)

## Beschreibung

Die Erfindung betrifft einen Gasgenerator zur Erzeugung von Wasserstoffgas auf der Basis der Reaktion wasserreaktiver Substanzen mit Meerwasser, insbesondere für die Brennstoffversorgung einer Brennstoffzelle eines Unterwasserfahrzeuges. Ferner betrifft sie ein Verfahren zur Herstellung eines derartigen Gasgenerators.

Es sind bereits Gasgeneratoren zur Erzeugung von Wasserstoffgas bekannt, bei denen die Gaserzeugung auf einer Reaktion des umgebenden Meerwassers mit einem wasserreaktiven Treibstoff erfolgt. Um derartige Gasgeneratoren auch in tiefsttauchfähigen Unterwasserfahrzeugen einsetzen zu können, die beispielsweise in einem Tauchtiefenbereich von etwa 4000 bis 6000 Metern unbemannt autonom operieren sollen, müssen eine Reihe von Voraussetzungen erfüllt sein, die bei den bekannten Gasgeneratoren dieser Art üblicherweise nicht gegeben sind. Hierzu gehören eine hohe volumetrische Wasserstoff-Lieferkapazität und ein reproduzierbarer Langzeit-Gaserzeugungsbetrieb auch bei sehr geringen Gaserzeugungsraten. Ein Charakteristikum der die Anforderung hoher Wasserstoff-Lieferkapazität erfüllenden Feststoffe bzw. Feststoffgemische besteht nämlich darin, dass die nicht gasförmigen Reaktionsprodukte schwer wasserlöslich sind und ein deutlich größeres Volumen einnehmen als der Ausgangstreibstoff und dass damit die Gefahr einer Verkrustung und Verblockung der Reaktionszone gegeben ist. Weiterhin sollte die Anwendung eines derartigen Generators eine gute Handhabbarkeit mit einer möglichst geringen Interaktionen mit dem Betrieb des Tauchfahrzeuges kombinieren. Insbesondere sollten die Balanceeigenschaften nicht nachteilig beeinflusst werden, da in derartig großen Tauchtiefen ein Ausgleich sich ändernder Auf- und Abtriebsverhältnisse einen hohen energetischen Aufwand erfordert.

Daneben ist aus der US-A-3 158 994 ein Unterwasser-Rückstoßantrieb in der Art eines Raketen- oder Staustrahl-Antriebs bekannt geworden, bei dem neben verschiedenen Treibstoffkombinationen die Verwendung eines Oxidators vorgesehen ist, der entweder direkt eingebracht oder getrennt zugeführt wird und wobei Umgebungswasser als zusätzliche Komponente zum Zweck der Einsparung von Oxidatormasse sowie für den Reaktionsanlauf mit aufgenommen werden kann. Dabei sollen die verwendeten Treibstoffkombinationen mit den Oxidatoren völlig bzw. weitestgehend abgasfrei reagieren und dadurch gasblasenfreie und tauchtiefenunabhängige geschlossene Antriebssysteme ermöglichen, die beispielsweise für Torpedos geeignet sind.

Ferner ist in dieser Druckschrift eine Methode zur Herstellung eines Festoffblocks angegeben, der aus Lithiumhydrid-Partikeln in einer Matrix aus Lithium besteht und bei der eine Mischung aus pulverförmigem Lithiumhydrid und pulverförmigen Lithium auf eine Temperatur über den "Fließpunkt" von Lithium erhitzt und unter Überdruck geformt wird.

Der Erfindung liegt die Aufgabe zugrunde, einen Gasgenerator der eingangs genannten Art so auszubilden, dass er in einem tiefsttauchfähigen, d.h. in einem Tauchtiefenbereich von etwa 4000 bis 6000 Metern unbemannt autonom operierenden Unterwasserfahrzeug einsetzbar ist und ein sicherer Generatorbetrieb bei allen während der Mission auftretenden Positionen des Fahrzeuges gewährleistet ist.

Die Erfindung löst die Aufgabe dadurch, dass bei einem derartigen Gasgenerator die wasserreaktiven Substanzen einen Feststoffblock bilden, dessen Dichte derjenigen des Meerwassers entspricht, und dass die Reaktion in einem an sich bekannten offenen Verfahren unter Umgebungsdruck abläuft, wobei ein freier Zugang des Meerwassers zum Generator besteht. Infolge dieser gleich hohen Dichte des Treibstoffgemisches einerseits und des umgebenden Meerwassers andererseits bleibt die Vertikallagestabilisierung des Unterwasserfahrzeuges während seiner gesamten Mission bzw. bis zum vollständigen Verbrauch des Treibstoffes erhalten.

Dadurch, dass bei dem erfindungsgemäßen Gasgenerator der Umsetzungsprozeß in einem offenen Verfahren abläuft, bei dem ein freier Zugang des Meerwassers in den Generator gegeben ist und der Gaserzeugungsprozeß unter dem herrschenden Umgebungsdruck abläuft, ist sichergestellt, dass über den Wasserzugang die nicht gasförmigen Reaktionsprodukte aus dem Inneren des Generators abtransportiert werden und dass diese somit keinen Einfluss auf die Massenbilanz der Reaktion und die Lagestabilität des Fahrzeuges ausüben können. Bei solchen nach dem offenen Prinzip arbeitenden Gasgeneratoren werden die beiden Reaktionspartner "Flüssig" und "Fest" durch das bei der Reaktion entstehende Gas so lange voneinander getrennt, bis durch den Verbrauch des entstandenen Gases ein erneuter Kontakt der Reaktionspartner zustande kommt. Im Prinzip ist dieses Arbeitsverfahren in seiner allgemeinen Form vom sogenannten "Kipp'schen" Apparat, oder Gasentwickler, bekannt.

Bei der bevorzugten Ausführungsform des erfindungsgemäßen Gasgenerators besteht der Feststoffblock aus einem Gemisch aus Lithiumhydrid und Calciumhydrid und das niedrigschmelzende wasserreaktive Metall Natrium. Durch die Anwesenheit des Natriums werden infolge des sich bei der Umsetzung bildenden gut wasserlöslichen Natriumhydroxides auch die nicht so gut wasserlöslichen Hydroxide der übrigen Treibstoffkomponenten rasch von der Reaktionsfläche abgelöst, wodurch eine stets saubere Reaktionsfläche gewährleistet bleibt und eine Verkrustung dieser Reaktionsfläche durch nicht wasserlösliche Hydroxide, die mit einer entsprechenden Behinderung der Gaserzeugungsreaktion einhergehen würde, zuverlässig vermieden wird. Diese Gefahr ist ansonsten insbesondere bei Gasgeneratoren gegeben, die durch eine vergleichsweise niedrige Gaserzeugungsrate über einen längeren Zeitraum, z. B. mehrere Tage, gekennzeichnet sind, was insbesondere bei der Versorgung von Brennstoffzellen der Fall ist. Ein weiterer Vorteil besteht darin, dass es sich bei dem für das bevorzugte Feststoffgemisch vorgesehenen Komponenten um großtechnisch herstellbare und am Markt in beliebigen Mengen verfügbare Substanzen handelt.

In vorteilhafter Weiterbildung der Erfindung wird der Feststoffblock völlig gasblasenfrei hergestellt und widersteht dadurch auch den extrem hohen Umgebungswasserdrucken von bis zu 600 bar, wie sie in den vorgesehenen Einsatztauchtiefen auftreten, ohne Verformung oder Beschädigung. Diese Gasblasenfreiheit wird in Lösung der weiteren Aufgabe dadurch erzielt, dass eine die Metallhydridgemisch-Füllung enthaltende Form nach dem Erhitzen bis über den Schmelzpunkt des Zusatzmetalls mittels einer Vakuumpumpe evakuiert wird und anschließend das flüssige Zusatzmetall unter hohem Überdruck in die Form eingedrückt wird, so dass auch die kleinsten Hohlräume und Spalte zuverlässig mit diesem Metall gefüllt werden. Die gasblasenfreie Konsistenz des Feststoffblockes und seine daraus resultierende hohe Verformungsfähigkeit, ohne auseinanderzubrechen, machen erst den Einsatz eines derartigen Stoffgemisches unter den hohen Umgebungsdrucken bei Tiefsttauchmissionen möglich.

Dadurch, dass in weiterer Ausgestaltung der Erfindung der erfindungsgemäße Gasgenerator in dem für den Einbau vorgesehenen Bereich des Unterwasserfahrzeuges derart gelenkig gehaltert ist, daß sich bei allen Fahrzeugbewegungen stets eine vertikale Lage der Hochachse des Gehäuses des Gasgenerators und damit auch immer eine Parallellage der Oberflächen der beiden Reaktionspartner, d.h. des Treibstoffblocks und des Wasserspiegels im Inneren des Gasgenerators, zueinander einstellt, wird ein gleichförmiger Abbau des Treibstoffes und damit zugleich eine gleichförmige Gaserzeugung gewährleistet. Diese Art der Lagerung kann in vorteilhafter Weise durch einen Kardanrahmen oder durch eine kardanische oder Kugelaufhängung am oberen Pol des Gehäuses des Gasgenerators erreicht werden.

Der erfindungsgemäße Gasgenerator funktioniert dabei unabhängig vom Umgebungsdruck und erfordert somit keine Druckschale. Eine Neubetankung des Gasgenerators nach der Erfindung kann durch einfaches Nachladen eines Treibstoffblockes in das Generatorgehäuse vorgenommen werden.

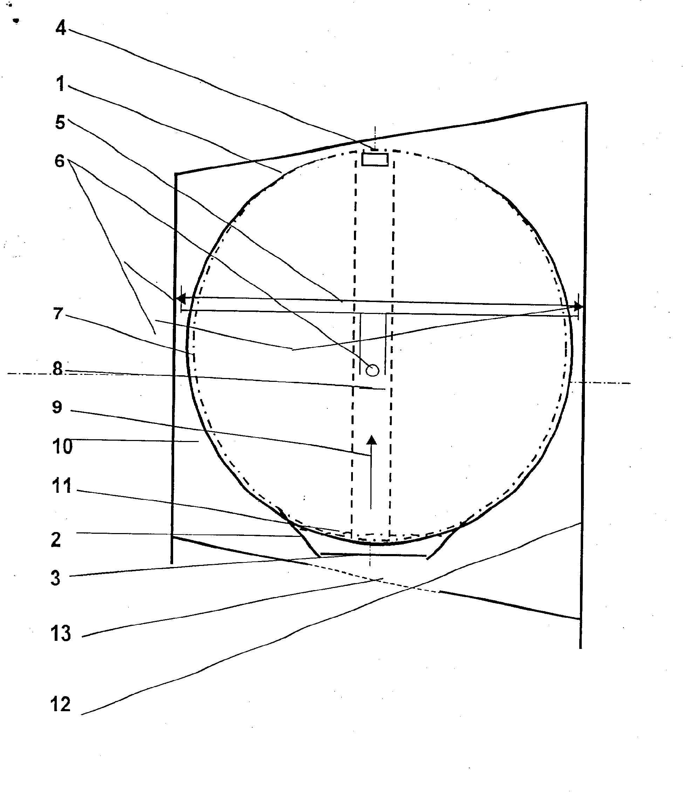

Nachfolgend soll die Erfindung anhand eines in der Zeichnung dargestellten Ausführungsbeispiels näher erläutert werden. Die Figur zeigt die Konfiguration eines kugelförmigen Gasgenerators zur Erzeugung von Wasserstoffgas, der durch geeignete konstruktive Maßnahmen, im Fall des hier dargestellten Ausführungsbeispiels über einen Kardanrahmen, derart gelenkig mit dem Fahrzeug verbunden ist, daß eine Bewegung des Generatorgehäuses zum Ausgleich aller möglichen Fahrzeugbewegungen, also insbesondere auch von Drehbewegungen um die Roll- bzw. Nickachse, möglich ist. Dadurch wird sichergestellt, daß das Gehäuse immer in seiner senkrechten Nominallage verbleibt. Diese senkrechte Nominallage wird durch konstruktive Maßnahmen stabilisiert, die im einzelnen nachfolgend erläutert werden sollen.

Wie in der Figur zu erkennen, besteht der Gasgenerator aus einem kugelförmigen Gehäuse 1 mit einem Zu- und Ablauftrichter 2, an dem weiterhin auch die Zusatzmassen zur Stabilisierung der Vertikallage angeordnet sind und das an seiner Unterseite eine Öffnung 3 aufweist. Am oberen Pol des Gehäuses 1 befindet sich ein Gasentnahmeanschluß 4. Das Generatorgehäuse 1 ist in einem Kardanrahmen 5 gelagert, wobei zwei Lagerpaare 6 eine freie Beweglichkeit bezüglich der Roll- und der Nickachse des Fahrzeuges gewährleisten.

Im Gehäuse 1 befindet sich ein Block 7 aus einem wasserreaktiven Stoffgemisch, der mit einer Zentralbohrung 8 zur Abzapfung des erzeugten gasförmigen Wasserstoffes versehen ist. Das Generatorgehäuse 1 ist in einem Generatorabteil 10 eines Unterwasserfahrzeuges angeordnet, dessen Außenhülle 12 in der Figur angedeutet ist. Für den Zu- und Ablauf des Umgebungswassers ist im unteren Bereich dieser Außenhülle 12 eine Siebstruktur 13 vorgesehen.

Der im Generatorgehäuse befindliche wasserreaktive Treibstoff, der einen Block von kugelförmiger Gestalt bildet, besteht aus einem Gemisch von Lithiumhydrid (LiH), Calciumhydrid (CaH₂) sowie metallischem Natrium (Na). Es handelt sich somit um Stoffe, die im Kontakt mit Wasser das Wasserstoffgas freisetzen. zugleich weisen diese drei Komponenten unterschiedliche Eigenschaften auf, die sie für den Einsatz im vorliegenden Anwendungsfall besonders geeignet machen. So ist das Lithiumhydrid ein effektiver Wasserstoffspeicher, wobei 25% der Masse des LiH aus Wasserstoff bestehen. Das Calciumhydrid besitzt eine hohe Dichte, wodurch es möglich ist, eine Gemischdichte einzustellen, die praktisch exakt gleich derjenigen des umgebenden Meerwassers ist, so dass durch den Verbrauch des Treibstoffs keine Auf- bzw. Abtriebs- bzw. daraus resultierende Probleme hinsichtlich des Gleichgewichts des Gehäuses entstehen können.

Das Natrium schließlich verbindet die einzelnen Kristalle des LiH/CaH₂-Gemisches vollkommen hohlraumfrei, so daß auch unter den hohen Umgebungsdrucken, wie sie bei den vorgesehenen extremen Tauchtiefen herrschen, keinerlei Verformungen oder mechanische Beschädigungen des Treibstoffblocks auftreten. Außerdem liefert das Natrium bei seiner Umsetzung mit Wasser das hoch wasserlösliche Reaktionsprodukt Natriumhydroxid, das die Ablösung der beiden anderen, weitaus weniger wasserlöslichen Hydroxide von der Reaktionsfläche bewirkt, so daß es nicht zu einem Verblocken der Reaktionsfläche und damit zu einer Störung der wasserstofferzeugung kommen kann. Diese beiden Hydroxide fallen vielmehr in kleinen Flocken von der Reaktionsfläche ab und werden durch den pulsierenden Wasserstrom, der durch den ständigen Auf- und Abstieg der im Generatorgehäuse vorhandenen wassermenge entsteht, aus diesem herausgespült. Im Betrieb ist das Generatorabteil 10 vollständig mit Wasser gefüllt, wobei in der Figur der im Generatorgehäuse 1 befindliche auf- und absteigende Wasserspiegel 11 angedeutet ist. Die Höhe dieses Wasserspiegels 11 ist dabei abhängig vom Druck des erzeugten wasserstoffgases. Sobald dieser unter den Druck des umgebenden Meerwassers abfällt, steigt der Wasserspiegel so weit an, dass die Reaktionsoberfläche des Feststoffblockes 7 erneut benetzt wird und die vorübergehend unterbrochene Gaserzeugungsreaktion setzt erneut ein. Der Abbau des Treibstoffs erfolgt in der durch den Pfeil 9 angedeuteten Richtung. Da der Treibstoff und das umgebende Meerwasser die gleiche Dichte aufweisen, bleibt die einmal eingestellte Stabilität der Vertikallage bis zum völligen Verbrauch des Treibstoffs aufrechterhalten.

Das erzeugte Gas wird durch die Zentralbohrung 8 im Inneren des Blocks nach oben geführt und von dort über hier nicht dargestellte kombinierte Rohr- und Schlauchleitungen abgenommen. Diese flexiblen Schlauchleitungen ermöglichen eine praktisch ungehinderte Bewegung des Generatorgehäuses 1 innerhalb des Kardanrahmens 5.

## Patentansprüche

1. Gasgenerator zur Erzeugung von Wasserstoffgas auf der Basis der Reaktion wasserreaktiver Substanzen mit Meerwasser in einem an sich bekannten offenen Verfahren unter Umgebungsdruck, insbesondere für die Brennstoffversorgung einer Brennstoffzelle eines Unterwasserfahrzeuges, **dadurch gekennzeichnet, dass** die wasserreaktiven Substanzen einen Feststoffblock (7) bilden, dessen Dichte derjenigen des Meerwassers entspricht, wobei ein freier Zugang des Meerwassers zum Generator besteht und wobei der Feststoffblock aus einem Gemisch wasserreaktiver Metallhydride sowie aus metallischem Natrium besteht.

2. Gasgenerator nach Anspruch 1, **dadurch gekennzeichnet, dass** der Feststoffblock aus einem Gemisch aus Lithiumhydrid (LiH) und Calciumhydrid (CaH₂) sowie dem metallischen Natrium besteht.

3. Gasgenerator nach einem der Ansprüche 1 bis 3, der ein den Feststoffblock (7) enthaltendes Gehäuse (1) umfasst, das derart frei beweglich gehaltert ist, dass sich die Reaktionsoberfläche des Feststoffblocks (7) parallel zum Wasserspiegel (11) des Meerwassers einstellt.

4. Gasgenerator nach Anspruch 4, **dadurch gekennzeichnet, dass** eine kardanische Aufhängung (5, 6) des Gehäuses (1) vorgesehen ist.

5. Gasgenerator nach einem der Ansprüche 1 bis 5, **dadurch gekennzeichnet, dass** der Feststoffblock (7) gasblasenfrei hergestellt ist.

## Claims

1. A gas generator for the production of hydrogen gas on the basis of the reaction of water-reactive substances with seawater in an open method known per se under ambient pressure, in particular for the fuel supply of a fuel cell of an underwater vehicle, **characterized in that** the water-reactive substances form a solid block (7), the density of which corresponds to that of the seawater, wherein a free access of the seawater to the generator exists and wherein the solid block consists of a mixture of water-reactive metal hydrides and of metallic sodium.

2. The gas generator according to Claim 1, **characterized in that** the solid block consists of a mixture of lithium hydride (LiH) and calcium hydride (CaH₂) and the metallic sodium.

3. The gas generator according to one of Claims 1 to 3, which comprises a housing (1) containing the solid block (7), which housing is mounted so as to be freely movable such that the reaction surface of the solid block (7) is positioned parallel to the water level (11) of the seawater.

4. The gas generator according to Claim 4, **characterized in that** a cardanic suspension (5, 6) of the housing (1) is provided.

5. The gas generator according to one of Claims 1 to 5, **characterized in that** the solid block (7) is produced free of gas bubbles.

## Revendications

1. Générateur de gaz pour produire du gaz d'hydrogène sur la base de la réaction de substances réactives à l'eau avec l'eau de mer dans un procédé connu en soi ouvert sous pression ambiante, notamment pour l'alimentation en combustible d'une cellule combustible d'un véhicule sous-marin, **caractérisé en ce que** les substances réactives à l'eau forment un bloc de matière solide (7), dont l'épaisseur correspond à celle de l'eau de mer, dans lequel un accès libre de l'eau de mer au générateur est constitué et dans lequel le bloc de matière solide est constitué d'un mélange d'hydrures de métal réactifs à l'eau ainsi que de sodium métallique.

2. Générateur de gaz selon la revendication 1, **caractérisé en ce que** le bloc de matière solide est constitué d'hydrure de lithium (LiH) et d'hydrure de calcium (CaH₂) ainsi que du sodium métallique.

3. Générateur de gaz selon une des revendications 1 à 3, qui comprend un boîtier (1) contenant le bloc de matière solide (7), qui est soutenu de manière mobile librement de telle sorte que la surface de réaction du bloc de matière solide (7) s'ajuste parallèlement au niveau d'eau (11) de l'eau de mer.

4. Générateur de gaz selon la revendication 4, **caractérisé en ce que** une suspension de Cardan (5,6) du boîtier (1) est prévue.

5. Générateur de gaz selon une des revendications 1 à 5, **caractérisé en ce que** le bloc de matière solide (7) est fabriqué sans bulles de gaz.
